# DEMANDE DE BREVET EUROPEEN

(11) **EP 1 698 422 A2**
(43) Date de publication de la demande: **06.09.2006**
(21) Numéro de dépôt: 06300163.0
(22) Date de dépôt: 24.02.2006
(51) Int. Cl.: B23K 10/00

(54) **Poste de coupage plasma à compresseur d'air intégré**

(30) Priorité: 03.03.2005 FR 0550572
(71) Demandeur: LA SOUDURE AUTOGENE FRANCAISE, 75321 Paris Cédex 07 (FR)
(72) Inventeur: STECULORUM, Nicolas, 76240, LE MESNIL ESNARD (FR); NATHAN, Marc, 75016, PARIS (FR)
(74) Mandataire: Pittis, Olivier

(57) **Abrégé**

Poste (1) électrique, en particulier de coupage à l'arc plasma, comprenant un compresseur d'air intégré permettant de comprimer de l'air à une pression supérieure à la pression ambiante, et des premiers moyens d'acheminement d'air comprimé, raccordés à une sortie du compresseur d'air, pour acheminer l'air comprimé par le compresseur, vers au moins une sortie (3) d'alimentation en air comprimé, caractérisé en ce qu'il comprend, en outre, des moyens d'entrée (2) d'air comprimé, reliés fluidiquement à des second moyens d'acheminement d'air comprimé, pour alimenter lesdits second moyens d'acheminement d'air avec de l'air préalablement comprimé à l'extérieur du poste, lesdits second moyens d'acheminement d'air comprimé permettant d'acheminer ledit air comprimé à l'extérieur du poste vers une sortie d'alimentation (3) en air comprimé.

## Description

L'invention porte sur un poste ou générateur de courant électrique, en particulier pour coupage à l'arc plasma, à compresseur intégré.

Dans le domaine du coupage à l'arc plasma manuel, il est d'usage d'utiliser un poste ou générateur de courant portatif en tant que source de courant électrique alimentant la torche de coupage manuelle dont se sert l'opérateur pour réaliser la découpe de la tôle.

Par ailleurs, pour obtenir une expulsion du métal fondu hors de la saignée de coupe, il est nécessaire d'alimenter la torche avec un gaz sous pression comprenant un ou plusieurs constituants gazeux ; la combinaison du gaz et de l'arc électrique formant le jet de plasma de coupe. En coupage plasma manuel, l'un des gaz communément utilisé est l'air comprimé.

Dans les postes récents et compacts, il est d'usage d'intégrer un compresseur d'air de petite taille de manière à donner une autonomie maximale à l'utilisateur qui doit pouvoir se déplacer facilement, sur un chantier par exemple, et à permettre l'utilisation du poste après simple raccordement électrique à une source d'alimentation électrique, tel un réseau de courant ou analogue. A ce titre, on peut citer le poste SAXOZIP™ commercialisé par la Demanderesse.

Autrement dit, le compresseur d'air est toujours intégré au poste de coupage sans qu'il ne soit possible d'utiliser séparément le poste ou le compresseur.

Or, les mini-compresseurs intégrés aux postes actuels ont une capacité en air comprimé limitée, ce qui en limite les possibilités de coupe, puisqu'un poste donné ne pourra pas être utilisé pour découper une épaisseur de tôle dépassant une limite maximale correspondant à la capacité maximale du compresseur d'air.

En particulier, il est difficile d'atteindre un coupage efficace avec les postes actuels, lorsque l'air comprimé doit être décliné à la torche sous un débit de 100l/mn et une pression de 4,5 bars, ou au-delà.

De même, dans certains cas, il peut être intéressant de pouvoir utiliser un outil pneumatique préalablement, durant ou postérieurement à l'opération de travail à l'arc, tel un coupage plasma, par exemple pour exécuter une opération de meulage ou un « soufflage » pneumatique des pièces, ce qui n'est pas prévu avec les postes actuels.

Le problème à résoudre est donc d'améliorer les postes ou générateur de courant électrique, en particulier ceux de coupage plasma, à compresseur intégré de manière à accroître leurs possibilités d'utilisation, c'est à dire de manière à permettre une utilisation du poste pour une capacité de travail, en particulier de coupe, correspondant à la capacité du compresseur intégré mais également permettant, en cas de besoin, d'aller au-delà de cette limite de capacité du compresseur, voire de pouvoir utiliser en outre le poste pour réaliser une opération complémentaire avec un outil pneumatique.

La solution de l'invention est un poste électrique de coupage à l'arc plasma comprenant :
- un compresseur d'air intégré permettant de comprimer de l'air à une pression supérieure à la pression ambiante,
- des premiers moyens d'acheminement d'air comprimé, raccordés à une sortie du compresseur d'air, pour acheminer l'air comprimé par le compresseur, vers au moins une sortie d'alimentation en air comprimé,
caractérisé en ce qu'il comprend, en outre, des moyens d'entrée d'air comprimé, reliés fluidiquement à des second moyens d'acheminement d'air comprimé, pour alimenter lesdits second moyens d'acheminement d'air avec de l'air préalablement comprimé à l'extérieur du poste, lesdits second moyens d'acheminement d'air comprimé permettant d'acheminer ledit air comprimé à l'extérieur du poste vers une sortie d'alimentation en air comprimé.

Selon le cas, le poste de l'invention peut comprendre l'une ou plusieurs des caractéristiques suivantes :
- les premier moyens d'acheminement d'air comprimé et les second moyens d'acheminement d'air comprimé alimentent une même sortie d'alimentation en air comprimé comprenant des moyens de raccordement d'une torche de coupage plasma de manière à permettre une alimentation de ladite torche avec de l'air comprimé provenant desdits premier ou second moyens d'acheminement d'air comprimé.
- les premier moyens d'acheminement d'air comprimé et les second moyens d'acheminement d'air comprimé alimentent une première et une deuxième sorties d'alimentation en air comprimé comprenant des moyens de raccordement d'une torche à arc électrique de manière à permettre une alimentation de ladite torche avec de l'air comprimé issu d'une desdites première et une deuxième sorties, et des moyens de raccordement d'outil pneumatique de manière à permettre une alimentation d'un outil pneumatique avec de l'air comprimé issu de l'autre desdites première et deuxième sorties.
- les premier et second moyens d'acheminement d'air comprimé comprennent un ou plusieurs conduits de gaz.
- il comporte, en outre, des moyens de sélection actionnables par l'opérateur et coopérant, directement ou indirectement, avec les premier et second moyens d'acheminement d'air comprimé de manière à alimenter au moins une sortie d'alimentation en air comprimé avec de l'air comprimé provenant des premier ou des second moyens d'acheminement d'air comprimé en fonction d'une sélection opérée par l'opérateur.
- les moyens de sélections comprennent un sélecteur mobile entre plusieurs positions de sélection comportant une première position autorisant l'envoi, vers la sortie d'alimentation en air comprimé, uniquement d'air comprimé par le compresseur intégré et acheminé par lesdits premier moyens d'acheminement d'air, et une deuxième position autorisant l'envoi, vers la sortie d'alimentation en air comprimé, uniquement d'air comprimé à l'extérieur du poste et acheminé par lesdits second moyens d'acheminement d'air.
- il comporte, en outre, des moyens d'alimentation en courant électrique.
- les moyens de sélection coopèrent avec le compresseur intégré et/ou avec une ou plusieurs vannes agencées sur les premier et/ou les second moyen d'acheminement d'air comprimé de manière à autoriser ou, à l'inverse, à empêcher l'envoi d'air comprimé véhiculé par l'un ou l'autre desdits premier et second moyens d'acheminement d'air vers la sortie d'alimentation en air comprimé.
- il comporte une torche de coupage plasma raccordée à la sortie d'alimentation en air comprimé, de préférence le raccordement de la torche à la sortie d'alimentation se fait par l'intermédiaire d'une canalisation flexible permettant d'amener l'air comprimé depuis la sortie d'air comprimé du poste à la torche de coupage.
- la torche est raccrochée à la sortie d'alimentation par l'intermédiaire d'un faisceau de raccordement comprenant une canalisation flexible d'amenée d'air comprimé et une ou plusieurs liaisons électriques permettant d'amener du courant électrique depuis le poste à la torche.

L'invention porte aussi sur un procédé de coupage plasma mettant en oeuvre un poste selon l'invention.

La solution de l'invention permet d'augmenter la capacité de coupage d'un poste à compresseur intégré en permettant un raccordement au poste d'une source d'air comprimé extérieure au poste, par exemple un réseau d'air comprimé, ce qui permet d'accroître, en cas de besoin, le débit et/ou la pression d'air envoyée à la torche et ainsi de permettre le coupage de tôles d'épaisseurs plus importantes que celles pouvant être coupées lorsque la torche est alimentée par le compresseur intégré au poste.

Autrement dit, un générateur de coupage plasma avec un compresseur intégré selon l'invention peut soit couper de façon autonome des tôles avec une capacité de coupe limitée à la puissance du compresseur intégré, soit être utilisé en pleine puissance avec une alimentation en air comprimé extérieure. Ce système permet également de pouvoir profiter du compresseur intégré au générateur pour le branchement d'autres accessoires pneumatiques directement sur le poste.

De plus, la solution de l'invention permet aussi l'utilisation du compresseur indépendamment du générateur de coupage plasma.

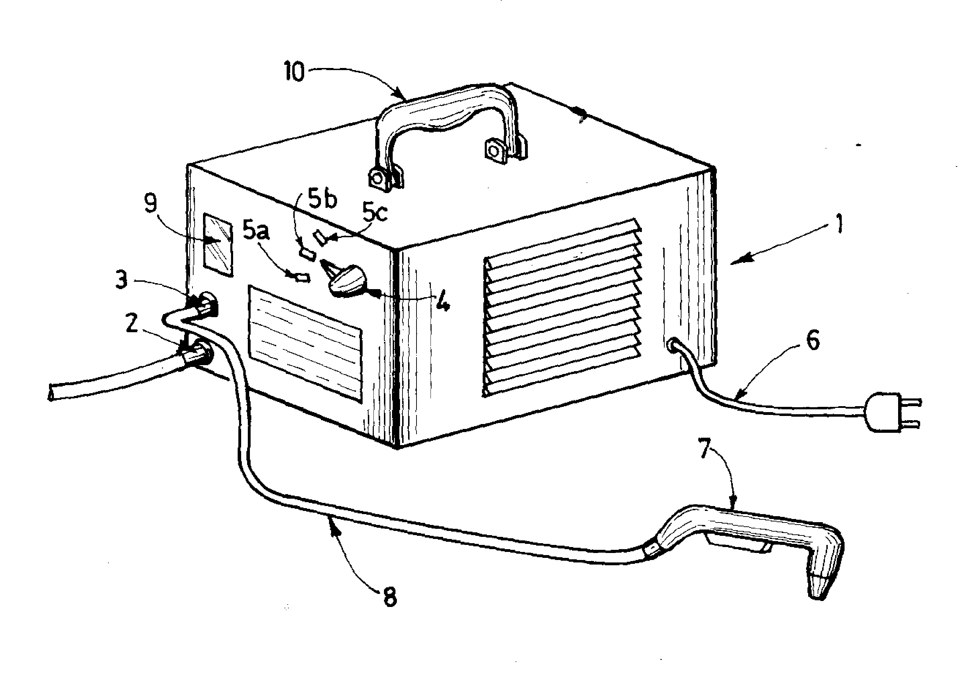

La figure annexée représente le schéma d'un poste de coupage plasma portatif servant à illustrer l'invention. Le fonctionnement général du poste ne sera pas détaillé ci-après car il ne diffère pas fondamentalement des postes existants, tel le poste à onduleur dénommé SAXOZIP™ commercialisé par la Soudure Autogène Française ou Air Liquide Welding.

Le poste 1 de la figure annexée comporte, de manière connue en soi, un compresseur d'air, intégré au sein de la carcasse du poste, permettant de comprimer de l'air à une pression supérieure à la pression ambiante et des premiers moyens d'acheminement d'air comprimé, tel un conduit de gaz ou un circuit interne de gaz, raccordés à une sortie du compresseur d'air, pour acheminer l'air comprimé par le compresseur, vers la sortie 3 d'alimentation en air comprimé à laquelle est raccordé le faisceau d'alimentation 8 en gaz et en électricité d'une torche manuelle de coupage 7 à l'arc plasma.

Selon l'invention, des moyens d'entrée 2 d'air comprimé, reliés fluidiquement à des second moyens d'acheminement d'air comprimé, tel un conduit de gaz ou un circuit interne de gaz, pour alimenter les second moyens d'acheminement d'air avec de l'air préalablement comprimé à l'extérieur du poste, c'est-à-dire par un (ou plusieurs) compresseur d'air non-intégré au poste 1.

Les second moyens d'acheminement d'air comprimé permettent d'acheminer l'air comprimé à l'extérieur du poste 1 vers la sortie d'alimentation 3 en air comprimé.

Dans ce cas, une sortie unique 3 d'air sert à alimenter la torche 7; toutefois, on pourrait prévoir plusieurs sorties pour l'air, par exemple une sortie pour l'air comprimé dans le poste 1 et une autre sortie pour l'air comprimé à l'extérieur du poste 1.

Des moyens de sélection 4, actionnables par l'opérateur, coopèrent, directement ou indirectement, avec les premier et second moyens d'acheminement d'air comprimé de manière à alimenter la sortie 3 d'alimentation en air comprimé avec de l'air comprimé provenant des premier ou des second moyens d'acheminement d'air comprimé en fonction d'une sélection opérée par l'opérateur.

Les moyens de sélections comprennent un sélecteur 4 mobile, tel un bouton rotatif ou analogue, entre plusieurs positions 5a, 5b, 5c de sélection comportant :
- une première position autorisant l'envoi, vers la sortie 3, uniquement d'air comprimé par le compresseur intégré au poste 1 et acheminé par les premier moyens d'acheminement d'air, et
- une deuxième position autorisant l'envoi, vers la sortie 3, uniquement d'air comprimé à l'extérieur du poste et acheminé par les second moyens d'acheminement d'air.

Les moyens de sélection 4 coopèrent avec le compresseur intégré et avec une ou plusieurs vannes agencées sur les premier et les second moyens d'acheminement d'air comprimé de manière à autoriser ou, à l'inverse, à empêcher l'envoi d'air comprimé véhiculé par l'un ou l'autre desdits premier et second moyens d'acheminement d'air vers la sortie 3, et subséquemment vers la torche 7.

La torche 7 est raccrochée à la sortie 3 par l'intermédiaire d'un faisceau de raccordement comprenant une canalisation flexible 8 d'amenée d'air comprimé et une ou plusieurs liaisons électriques permettant d'amener du courant électrique depuis le poste 1 à la torche 7, l'électricité étant amené au poste 1 via des moyens d'alimentation en courant électrique 6 raccordables au secteur par exemple.

## Revendications

1. Poste (1) électrique de coupage à l'arc plasma comprenant :
- un compresseur d'air intégré permettant de comprimer de l'air à une pression supérieure à la pression ambiante,
- des premiers moyens d'acheminement d'air comprimé, raccordés à une sortie du compresseur d'air, pour acheminer l'air comprimé par le compresseur, vers au moins une sortie (3) d'alimentation en air comprimé,
- **caractérisé en ce qu'**il comprend, en outre, des moyens d'entrée (2) d'air comprimé, reliés fluidiquement à des second moyens d'acheminement d'air comprimé, pour alimenter lesdits second moyens d'acheminement d'air avec de l'air préalablement comprimé à l'extérieur du poste, lesdits second moyens d'acheminement d'air comprimé permettant d'acheminer ledit air comprimé à l'extérieur du poste vers une sortie d'alimentation (3) en air comprimé.

2. Poste selon la revendication 1, **caractérisé en ce que** les premier moyens d'acheminement d'air comprimé et les second moyens d'acheminement d'air comprimé alimentent une même sortie (3) d'alimentation en air comprimé comprenant des moyens de raccordement (8) d'une torche (7) de coupage plasma de manière à permettre une alimentation de ladite torche (7) avec de l'air comprimé provenant desdits premier ou second moyens d'acheminement d'air comprimé.

3. Poste selon l'une des revendications 1 ou 2, **caractérisé en ce que** les premier et second moyens d'acheminement d'air comprimé comprennent un ou plusieurs conduits de gaz.

4. Poste selon l'une des revendications 1 à 3, **caractérisé en ce qu'**il comporte, en outre, des moyens de sélection (4) actionnables par l'opérateur et coopérant, directement ou indirectement, avec les premier et second moyens d'acheminement d'air comprimé de manière à alimenter la sortie (3) d'alimentation en air comprimé avec de l'air comprimé provenant des premier ou des second moyens d'acheminement d'air comprimé en fonction d'une sélection opérée par l'opérateur.

5. Poste selon l'une des revendications 1 à 4, **caractérisé en ce que** les moyens de sélections comprennent un sélecteur (4) mobile entre plusieurs positions (5a, 5b, 5c) de sélection comportant :
- une première position autorisant l'envoi, vers la sortie (3) d'alimentation en air comprimé, uniquement d'air comprimé par le compresseur intégré et acheminé par lesdits premier moyens d'acheminement d'air, et
- une deuxième position autorisant l'envoi, vers la sortie (3) d'alimentation en air comprimé, uniquement d'air comprimé à l'extérieur du poste et acheminé par lesdits second moyens d'acheminement d'air.

6. Poste selon l'une des revendications 1 à 5, **caractérisé en ce qu'**il comporte, en outre, des moyens (6) d'alimentation en courant électrique.

7. Poste selon l'une des revendications 1 à 6, **caractérisé en ce que** les moyens de sélection (4) coopèrent avec le compresseur intégré et/ou avec une ou plusieurs vannes agencées sur les premier et/ou les second moyen d'acheminement d'air comprimé de manière à autoriser ou, à l'inverse, à empêcher l'envoi d'air comprimé véhiculé par l'un ou l'autre desdits premier et second moyens d'acheminement d'air vers la sortie (3) d'alimentation en air comprimé.

8. Poste selon les revendications 1 à 7, **caractérisé en ce qu'**il comporte une torche (7) de coupage plasma raccordée à la sortie (3) d'alimentation en air comprimé, de préférence le raccordement de la torche (7) à la sortie (3) d'alimentation se fait par l'intermédiaire d'une canalisation flexible (8) permettant d'amener l'air comprimé depuis la sortie (3) d'air comprimé du poste (1) à la torche (7) de coupage.

9. Poste selon l'une des revendications 1 à 8, **caractérisé en ce que** la torche (7) est raccrochée à la sortie (3) d'alimentation par l'intermédiaire d'un faisceau de raccordement comprenant une canalisation flexible (8) d'amenée d'air comprimé et une ou plusieurs liaisons électriques permettant d'amener du courant électrique depuis le poste (1) à la torche (7).

10. Poste selon la revendication 1, **caractérisé en ce que** les premier moyens d'acheminement d'air comprimé et les second moyens d'acheminement d'air comprimé alimentent une première et une deuxième sorties d'alimentation en air comprimé comprenant des moyens de raccordement d'une torche de travail à l'arc de manière à permettre une alimentation de ladite torche avec de l'air comprimé issu d'une desdites première et une deuxième sorties, et des moyens de raccordement d'outil pneumatique de manière à permettre une alimentation d'un outil pneumatique avec de l'air comprimé issu de l'autre desdites première et deuxième sorties.

11. Procédé de coupage plasma mettant en oeuvre un poste (1) selon l'une des revendications 1 à 10.
